# EUROPÄISCHE PATENTANMELDUNG

(11) **EP 3 613 912 A1**
(43) Veröffentlichungstag der Anmeldung: **26.02.2020**
(21) Anmeldenummer: 19164389.9
(22) Anmeldetag: 21.03.2019
(51) Int. Cl.: E04B 1/61, E04B 1/58, F16B 2/06, F16B 2/14, F16B 7/04

(54) **MODULARER BAUSATZ SOWIE ANBAUTEIL ZUM AUFBAU VON DREIDIMENSIONALEN STRUKTUREN FÜR DIE POSITIONSFESTE AUFNAHME VON WERKSTÜCKEN**

(30) Priorität: 23.08.2018 DE 202018104854 U
(71) Anmelder: WITTE BARSKAMP KG, 21354 Bleckede (DE)
(72) Erfinder: WITTE, Horst, 21369 Nahrendorf (DE)
(74) Vertreter: Raffay & Fleck

(57) **Zusammenfassung**

Offenbart wird ein modularer Bausatz zum Aufbau von dreidimensionalen Strukturen (1) für die positionsfeste Aufnahme von Werkstücken. Der Bausatz enthält quaderförmige Strebenelemente (2) und Verbindungselemente (3) zum Verbinden der quaderförmigen Strebenelemente (2). Er zeichnet sich dadurch aus, dass wenigstens eines der quaderförmigen Strebenelemente (2) an einem Längsende an einander gegenüberliegenden Seitenflächen Längsverzahnungen aus entlang einer Zahnlängsrichtung parallel verlaufenden Zahnreihen ausweist. Die Zahnreihen der beiden in den einander gegenüberliegenden Bereichen gebildeten Längsverzahnungen verlaufen ebenfalls parallel zueinander. Wenigstens eines der Verbindungselemente (3) hat an einander gegenüberliegenden Seitenflächen Lagerflächen mit zu den Längsverzahnungen an dem Längsende des Strebenelements (2) korrespondierende Längsverzahnungen. Die Längsverzahnungen an dem Längsende des Strebenelements (2) sind in die Längsverzahnungen an den Lagerflächen des Verbindungselements (3) kämmend einführbar und bilden in einer Richtung quer zu der Längsrichtung der Längsverzahnungen eine formschlüssige Verbindung. Ein Befestigungsmittel dient dem Fixieren von mit ihren Längsverzahnungen ineinander geführten Strebenelement (2) und Verbindungselement (3) in einer eingestellten Relativposition zueinander.

Mit einem solchen Bausatz ist eine einfache und sichere Verbindung von zu dem Bausatz gehörenden Teilen untereinander möglich. Weiterhin ist mit zu dem Bausatz gehörigen Anbauteilen eine einfache Justage auch von außerhalb eines Rastermaßes liegenden Geometrien ermöglicht und ist ein einfach gebildetes Schnellwechselsystems erhalten.

## Beschreibung

Die vorliegende Erfindung betrifft einen modularen Bausatz zum Aufbau von dreidimensionalen Strukturen für die positionsfeste Aufnahme von Werkstücken. Sie betrifft ferner ein Anbauteil für den Aufbau einer dreidimensionalen Struktur für die positionsfeste Aufnahme von Werkstücken.

Es ist bekannt, dass in der industriellen Produktion sowie in der Qualitätsüberwachung für die präzise Bearbeitung und/oder für eine Vermessung von Werkstücken komplexer Form diese auf spezifisch für diese Zwecke aufgebauten dreidimensionalen Strukturen, an denen definierte Anlagepunkte bzw. Klemmpunkte mit Anlagestücken oder Halteklemmen oder vergleichbaren Haltemitteln vorgesehen sind, positioniert und festgelegt werden. Ein solches Vorgehen wird zum Beispiel in der Automobilindustrie unternommen, wo komplexe Karosserieteile oder aber auch andere Fahrzeugteile oder ganze Baugruppen auf bzw. an solchen dreidimensionalen Strukturen festgelegt werden. Die entsprechenden dreidimensionalen Strukturen werden dort häufig als sogenannte "Meisterböcke" bezeichnet.

Ebenfalls seit langem bekannt ist es, derartige Strukturen für die Aufnahme von Werkstücken nicht starr und fest zu bauen und damit für die Aufnahme lediglich eines bestimmten Werkstückes zu gestalten, sondern diese aus modularen Bausätzen zu errichten, sodass die Strukturen nach Ende einer Verwendungszeit zum Aufspannen von Werkstücken einer gleichbleibenden Bauart weiterverwendet werden können, zum Beispiel durch Anbau weiterer Teile oder durch Umbau oder durch Rückbau und erneuten Aufbau einer anders geformten, an eine neue Werkstückform angepassten dreidimensionalen Struktur. Hierfür werden seit langem am Markt modulare Bausätze angeboten, die insbesondere quaderförmige Strebenelemente sowie Verbindungselemente zum Verbinden der Strebenelemente untereinander aufweisen, des weiteren auch plattenförmige Elemente, Aussteifungselemente und ähnliche Teile beinhalten können, sowie Anbauteile, wie zum Beispiel Anlageteile oder Halteelemente, wie zum Beispiel Spann- oder Klemmelemente.

Häufig weisen die modular miteinander verbau- und verbindbaren Elemente in einem vorgegebenen Raster angeordnete Einrichtungen zum Festlegen von weiteren Teilen des modularen Bausatzes auf. Ein solches Rastermaß kann zum Beispiel 20 mm, 25 mm, 40 mm oder 50 mm betragen. Um bei einem solchen System im Raum auch solche Auflagepunkte exakt ausbilden zu können, die nicht in einem zu dem Raster passenden bzw. dem Rastermaß entsprechenden Abstand bzw. in einer entsprechenden räumlichen Lage angeordnet sind, werden in derartigen Baukastensystemen auch solche Teile einbezogen, mit denen sich in den unterschiedlichen Raumrichtungen stufenlos Positionen einstellen lassen. Hierfür gibt es unterschiedliche Lösungen, zum Beispiel unterschiedlich dimensionierte Distanzstücken, Justageschlitten und dergleichen mehr.

Auch gibt es solche Lösungen, bei denen bestimmte Teile der dreidimensionalen Struktur bedarfsweise ausgewechselt und gegen andere, geometrisch anders geformte, Teile ausgetauscht werden müssen. Dies kann zum Beispiel für Werkstücke von prinzipiell gleichartiger Bauart, mit jedoch in bestimmten Abschnitten abweichender Formgebung der Fall sein, bei denen ein Abstützpunkt in der einen Variante im Raum anders orientiert liegend angeordnet werden muss als der Abstützpunkt in der anderen Variante des Werkstücks. Um dies zu bewerkstelligen, sind Schnellwechselsysteme bekannt, in denen ein Abschnitt der dreidimensionalen Struktur schnell und in einer positionsgetreuen Anlage ausgetauscht und durch einen Auswechselabschnitt ersetzt werden kann.

Ein am Markt seit langem bekanntes entsprechendes System, ein modularer Bausatz, ist das von der Anmelderin unter der Marke Alufix® angebotene System. Auch in diesem System gibt es Justageschlitten und Schnellwechselsysteme. Die dort bisher eingesetzten Justageschlitten und Schnellwechselsysteme zeichnen sich durch eine einfache Bedienbarkeit aus, sind allerdings in ihrem Aufbau komplex. So sind die Justageschlitten mit mit Nadellagern versehenen Gleitführungen versehen, entlang derer zwei Teile relativ zueinander verschoben und dann mit Stiften oder Schrauben relativ zueinander verriegelt und blockiert werden können. Diese Teile sind in der Herstellung aufwendig und entsprechend kostenintensiv. Zudem gilt es immer dann, wenn ein frei justierbarer Versatz außerhalb des vorgegebenen Rastermaßes in der dreidimensionalen Struktur verwirklicht werden soll, einen entsprechenden Justageschlitten oder ein vergleichbares Element einzusetzen. Ein solcher Versatz kann nicht unmittelbar an einer Verbindung zwischen zum Beispiel einem Strebenelement und einem Verbindungselement eingestellt und erhalten werden.

Hier setzt die vorliegende Erfindung mit der Aufgabe an, einen modularen Bausatz zum Aufbau von dreidimensionalen Strukturen für die positionsfeste Aufnahme von Werkstücken dahingehend zu verbessern, dass mit diesem eine einfache und sichere Verbindung von zu dem Bausatz gehörenden Teilen untereinander möglich ist und dass dieser Anbauteile aufweist, mit denen einer einfache Justage von insbesondere außerhalb eines Rastermaßes liegenden Geometrien ermöglicht ist und/oder die eine einfache Verwirklichung eines Schnellwechselsystems erlauben.

Diese Aufgabe wird erfindungsgemäß gelöst durch einen modularen Bausatz zum Aufbau von dreidimensionalen Strukturen für die positionsfeste Aufnahme von Werkstücken mit den Merkmalen des Anspruchs 1. In einem weiteren Aspekt wird diese Aufgabe gelöst durch ein Anbauteil für den Aufbau einer dreidimensionalen Struktur für die positionsfeste Aufnahme von Werkstücken mit den Merkmalen des Anspruchs 6. Vorteilhafte Weiterbildungen eines erfindungsgemäßen modularen Bausatzes sind in den Ansprüchen 2 bis 5 sowie 11 bis 14 angegeben. Vorteilhafte Weiterbildungen eines erfindungsgemäßen Anbauteils sind in den Ansprüchen 7 bis 14 bezeichnet. In Anspruch 15 ist schließlich eine Vorrichtung für die positionsfeste Aufnahme von Werkstücken, die sich dadurch auszeichnet, dass sie unter Verwendung eines wie mit der Erfindung vorgestellten Bausatzes und/oder unter Verwendung eines mit der Erfindung vorgeschlagenen Anbauteils ist.

Ein erfindungsgemäßer modularer Bausatz zum Aufbau von dreidimensionalen Strukturen für die positionsfeste Aufnahme von Werkstücken enthält zunächst einmal quaderförmige Strebenelemente sowie Verbindungselemente zum Verbinden der quaderförmigen Strebenelemente. Das Besondere an diesem Bausatz besteht nun darin, dass wenigstens eines der quaderförmigen Strebenelemente an wenigstens einem seiner Längsenden, dort an wenigstens zwei einander gegenüberliegenden Seitenflächen jeweils einen Bereich aufweist, in dem jeweils eine aus parallel und entlang einer Zahnlängsrichtung verlaufenden Zahnreihen gebildete Längsverzahnung eingebracht ist. Ferner ist die Besonderheit des erfindungsgemäßen Bausatzes darin gegeben, dass die Zahnreihen der beiden Bereiche ebenfalls parallel zueinander verlaufen und dass weiterhin wenigstens eines der Verbindungselemente an wenigstens zwei einander in einem Abstand planparallel gegenüberliegenden Lagerflächen ebenfalls Längsverzahnungen aufweist. Der Abstand, in dem sich die Lagerflächen einander gegenüber liegen, entspricht dabei dem Abstand der beiden die Längsverzahnungen aufweisenden, einander gegenüberliegenden Seitenflächen des quaderförmigen Strebenelements. Die Längsverzahnungen in den Lagerflächen korrespondieren zu den Längsverzahnungen an dem Längsende des Strebenelements, sodass die Längsverzahnungen an dem Längsende des Strebenelements in die Längsverzahnungen an den Lagerflächen des Verbindungselements kämmend und in einer Richtung quer zu der Längsrichtung der Längsverzahnungen eine formschlüssige Verbindung bildend einführbar sind. Weiterhin ist in erfindungsgemäßer Weise wenigstens ein Befestigungsmittel zum Fixieren der Verbindung zwischen Strebenelement und Verbindungselement vorgesehen. Dieses Befestigungsmittel kann z.B. ein Riegel sein, mit dem eine Aufnahmeöffnung zum Einführen des mit der Längsverzahnung versehenen Längsendes des Strebenelements in den Bereich zwischen den mit den Längsverzahnungen versehenen Lagerflächen des Verbindungselements verschlossen, das Strebenelement so an dem Verbindungselement gehalten wird. Mit besonderem Vorteil kann das Befestigungsmittel aber als Klemmmittel zum Aufbringen einer Klemmkraft auf die durch Einführen der an dem Längsende des Strebenelements ausgebildeten Längsverzahnungen in die an den Lagerflächen des Verbindungselements ausgebildeten Längsverzahnungen miteinander kämmenden Längsverzahnungen in einer quer zu der Zahnlängsrichtung der Längsverzahnungen liegenden Klemmrichtung ausgebildet sein.

Durch die wie oben beschriebene Ausgestaltung wenigstens eines der Strebenelemente und wenigstens eines der Verbindungselemente des modularen Bausatzes (es können selbstverständlich auch mehr als nur eines der Strebenelemente und mehr als nur eines der Verbindungselemente mit entsprechenden Strukturen versehen sein, es können die Verbindungselemente auch an mehreren Stellen wie vorbeschrieben ausgebildete Lagerflächen mit Längsverzahnungen aufweisen, und es können die Strebenelemente an ihren beiden Längsenden entsprechende Längsverzahnungen aufweisen) ist eine leicht zu schaffende Möglichkeit der Verbindung von Strebenelementen mit Verbindungselementen realisiert. Hierzu müssen lediglich die korrespondierenden Längsverzahnungen an Verbindungselement und Strebenelement durch Einschieben in Zahnlängsrichtung miteinander in Eingriff gebracht werden, und es muss zum Arretieren der Verbindung mittels z.B. des Klemmmittels eine Klemmkraft in der vorstehend beschriebenen Weise aufgebracht werden. Durch die Klemmkraft wird eine Relativbewegung zwischen den Längsverzahnungen in Zahnlängsrichtung verhindert; eine relative Bewegung quer dazu ist bereits aufgrund des Formschlusses zwischen den Längsverzahnungen weitgehend verhindert, wird durch die aufgebrachte Klemmkraft noch einmal zusätzlich unterbunden. Mit der wie vorstehend beschriebenen Verbindung ist es dabei, insbesondere wenn das Befestigungsmittel ein Klemmmittel umfasst, insbesondere möglich, diese Verbindung auch mit einem Versatz zu einem Rastermaß auszubilden bzw. einzustellen, welches zum Beispiel in den Strebenelementen und/oder in den Verbindungselementen ausgebildete Einrichtungen zum Festlegen weiterer der Elemente aufweisen können. Tatsächlich kann ein solcher Versatz in einem Bereich, der durch eine Verschiebung der Längsverzahnungen relativ zueinander in einer solchen Weise erhalten werden kann, dass die Längsverzahnungen noch ausreichend durch Aufbringen der Klemmkraft relativ zueinander arretiert werden können, in einer Richtung parallel zum Verlauf der Längsverzahnungen kontinuierlich eingestellt werden. Eine Veränderung des Abstandes (eines Versatzes) ist aber auch in einer Richtung quer, insbesondere senkrecht, zu dem Verlauf der Zahnlängsrichtung möglich, indem die beiden Längsverzahnungen mit unterschiedlicher Zahnzuordnung ineinander eingeführt werden. Hier lassen sich dann Einstellungen und Abstandsanpassungen vornehmen, die dem Abstand zweier benachbarter Zahnreihen in der Längsverzahnung, bzw. einem ganzzahligen Vielfachen dessen entsprechen (abhängig von der Anzahl der in den Zahnreihen angeordneten Längszähne). Wenn hier eine exakt in einem möglichen Rastermaß liegende Verbindung gewünscht ist, kann zum Beispiel ein Anschlag vorgesehen sein, der bei bis zum Anschlag ineinander geführten Längsverzahnungen eine Relativposition zwischen dem Verbindungselement und dem Strebenelement vorgibt, die eine Fortführung des Rastermaßes von dem Strebenelement zum Verbindungselement gewährleistet.

Grundsätzlich können die Längsverzahnungen mit ihrer Zahnlängsrichtung in beliebiger Orientierung relativ zu dem Element, in dem diese angeordnet sind, vorgesehen sein. So können diese auch schräg in Bezug auf zum Beispiel eine entlang der Richtung der längsten Erstreckung des quaderförmigen Strebenelements verlaufenden Längsrichtung orientiert sein, um zum Beispiel eine in einem Winkel abweichend von 90° oder 180° ausgeführte Verbindung zu realisieren. Besonders bevorzugt werden aber solche Verläufe, in denen die Zahnlängsrichtung entweder senkrecht zu der Längsrichtung des Strebenelements verläuft oder aber parallel dazu. Solche Orientierungen sind besonders gut geeignet, um einen rechtwinkligen Aufbau der dreidimensionalen Struktur, zum Beispiel eines Gerüsts, zu erhalten. Ein solcher rechtwinkeliger Aufbau erlaubt es, auf einfache und sichere, sowie zuverlässig wiederholbare Weise die Struktur in Richtung eines im Raum definierten Auflagepunkts für ein Werkstück zu bauen.

Wie bereits erwähnt, können die Strebenelemente und/oder die Verbindungselemente mit in vorgegebenen Rasterabständen angeordneten Einrichtungen zum Festlegen von weiteren Strebenelementen, Verbindungselementen und/oder Anbauteilen, wie Halteelementen, Anlagestücken, Distanzstücken, Justierstücken oder dergleichen versehen sein. Diese Einrichtungen zum Festlegen können zum Beispiel und insbesondere in den Rasterabständen angeordnete Bohrungen sein. Insbesondere können somit die erfindungsgemäß gestalteten Elemente mit an sich bekannten Elementen von bestehenden Bausätzen gleicher Bauart, also mit entsprechenden, in gleichem Rastermaß angeordneten Einrichtungen zum Festlegen weiterer Elemente, kombiniert und in einem gemeinsamen, dann erfindungsgemäßen Bausatz zusammengefasst werden.

Um ein Zusammenführen eines Strebenelements, genauer eines Längsendes des Strebenelements, an dem die Längsverzahnungen vorgesehen sind, mit einem Verbindungselement nicht nur vollständig durch Einschieben der Längsverzahnungen in der Zahnlängsrichtung zu erhalten, sondern die genannten Elemente auch in einer Richtung quer, insbesondere senkrecht, zu der Zahnlängsrichtung miteinander in Verbindung bringen zu können, können die Längsverzahnungen an dem Längsende des Strebenelements sowie an den Lagerflächen des Verbindungselements in der Zahnlängsrichtung gesehen jeweils wenigstens eine Unterbrechung aufweisen. Diese Unterbrechungen haben dann eine in Zahnlängsrichtung weisende Länge, die mit einer in der Zahnlängsrichtung liegenden Länge von mit der Längsverzahnung versehenen Bereichen der genannten Elemente insoweit korrespondiert, als dass die Bereiche mit den Längsverzahnungen mit den Unterbrechungen in Überdeckung gebracht werden können. Die Unterbrechungen sind dabei mit einer in ihrem Bereich rückspringenden Oberfläche versehen, sodass die Unterbrechungen quer zu der Zahnlängsrichtung über Bereiche mit der Längsverzahnung geführt werden können, um so die miteinander zu verbindenden Elemente miteinander zu verschränken, und dann durch eine Verschiebung entlang der Zahnlängsrichtung eine kämmenden Längsverzahnungen zu erhalten. Eine solche Lösung kann insbesondere dann von Vorteil sein, wenn für das Zusammenfügen von Strebenelementen und Verbindungselementen, die mit den vorstehend näher beschriebene Längsverzahnungen ausgestattet sind, nur in enger Bauraum zur Verfügung steht, zum Beispiel aufgrund von bereits an der dreidimensionalen Signalstruktur verbauten Teilen, die dort einen Freiraum einengen.

Das mindestens eine Strebenelement kann an seinem wenigstens einen Längsende, insbesondere auch an beiden Längsenden, insbesondere können dies auch mehrere der Strebenelemente des Bausatzes, auch an allen vier Seitenflächen Bereiche mit Längsverzahnungen aufweisen, sodass ein solches Strebenelement auch jeweils um 90° verdreht, also in unterschiedlichen Rotationspositionen mit einem Verbindungselement verbunden werden kann. Insbesondere können Längsverzahnungen, die einem Strebenelement ausgebildet sind, auf unterschiedlichen Flächenpaaren voneinander gegenüberliegenden Flächen mit unterschiedlicher Erstreckungsrichtung, zum Beispiel einmal mit der Zahnlängsrichtung in Längsrichtung des Strebenelements orientiert und einmal quer, insbesondere senkrecht, dazu orientiert, gebildet sein. Auch so wird ein Freiheitsgrad der Art der Verbauung und Verbindung erhöht.

In einem weiteren Aspekt der Lösung der Aufgabe wird ein erfindungsgemäßes Anbauteil für den Aufbau einer dreidimensionalen Struktur für die positionsfeste Aufnahme von Werkstücken (auch für den Anbau an einer solchen) angegeben, das insbesondere ein Bestandteil eines wie vorstehend beschriebenen Bausatzes sein kann. Dieses Anbauteil zeichnet sich dadurch aus, dass es wenigstens ein erstes Element mit zwei an einander planparallel gegenüberliegenden Außenflächen gebildeten, jeweils aus parallel und entlang einer Zahnlängsrichtung verlaufenden Zahnreihen gebildete Längsverzahnungen aufweist. Die Zahnreihen der beiden Längsverzahnungen verlaufen zueinander parallel. Weiterhin verfügt dieses Anbauteil über wenigstens ein zweites Element mit zwei einander in einem Abstand planparallel gegenüberliegenden Lagerflächen. Der Abstand, mit dem die Lagerflächen einander gegenüber liegen, entspricht dem Abstand, in dem die beiden Außenflächen des wenigstens einen ersten Elements einander gegenüber liegen. Die Längsverzahnungen in den Lagerflächen korrespondieren zu den Längsverzahnungen der Außenflächen in einer solchen Weise, dass die Längsverzahnungen der Außenflächen in die Längsverzahnungen der Lagerflächen kämmend und in eine Richtung quer zu der Längsrichtung der Längsverzahnungen eine formschlüssige Verbindung bildend einführbar sind.

Weiterhin ist bei dem mit der Erfindung angegebenen Anbauteil wenigstens ein Befestigungsmittel vorgesehen, mit dem die mit ihren Längsverzahnungen verbundenen Elemente erstes Element und zweites Element in ihrer Relativposition zueinander fixiert werden können. Auch hier kann ein solches Befestigungsmittel z.B. durch einen wie vorstehen schon beschriebenen Riegel gebildet sein, einen solchen Riegel enthalten. Mit besonderen Vorteil kann aber auch hier das Befestigungsmittel als ein Klemmmittel gebildet sein, bzw. ein solches Klemmmittel enthalten, mit dem eine Klemmkraft auf die durch Einführen der Längsverzahnungen der Außenflächen in die Längsverzahnungen der Lagerflächen miteinander kämmenden Längsverzahnungen in einer quer zu der Zahnlängsrichtung der Längsverzahnungen liegenden Klemmrichtung aufgebracht werden kann. Insbesondere mit einem Klemmmittel als Befestigungsmittel bzw. als Bestandteil eines solchen Befestigungsmittels, erlaubt ein solches Anbauteil eine kontinuierlich einstellbare Relativpositionierung des ersten Teils gegenüber dem zweiten Teil in einer Richtung parallel zu der Zahnlängsrichtung. Es ermöglicht zudem, wo dies erwünscht oder von Vorteil ist, auch eine um das Maß des Abstandes benachbarter Längszähne in den Zahnreihen rasterartig einstellbare Verstellung der beiden Elemente zueinander in einer Richtung senkrecht zu der Zahnlängsrichtung.

Mit einer solchen Gestaltung des Anbauteils lässt sich zum Beispiel ein Klemm- bzw. Spannelement bilden, in dem es zwei erste Elemente in Form von Klemmbacken enthält und ein zweites Element in Form einer Klemmbackenführung.

Ein solches Anbauteil kann aber auch als Justageschlitten ausgebildet sein für eine wie vorstehend beschriebene Einstellmöglichkeiten einer Distanz in der Zahnlängsrichtung in einer kontinuierlichen Weise.

Ein solches Anbauteil kann auch als ein Kreuzschlitten gebildet sein, mit dem eine kontinuierliche Einstellmöglichkeiten von Distanzen in zwei zueinander senkrechten Raumrichtungen möglich ist, indem das Anbauteil zwei erste und ein zweites Element oder zwei zweite und ein erstes Element aufweist und das nur einmal vorhandene Element, also das eine zweite Element oder das eine erste Element, an zwei zueinander beanstandeten Abschnitten jeweils mit parallel zueinander verlaufenden Längsverzahnungen versehene, zueinander planparallel angeordnete Flächen aufweist. Dabei sind die mit den Längsverzahnungen versehenen Flächen in einem ersten der beiden Abschnitte senkrecht zu den mit den Längsverzahnungen versehenen Flächen in dem zweiten der beiden Abschnitte orientiert. Weiterhin sind die Längsverzahnungen der Flächen in dem ersten Abschnitt zu den Längsverzahnungen der Flächen in dem zweiten Abschnitt parallel zu einer zu den Flächen beider Abschnitte senkrechten Ebene orientiert und verlaufen senkrecht zueinander.

Auch das erfindungsgemäße Anbauteil kann an den beiden Elementen mit wie vorstehend schon im Zusammenhang mit den Strebenelemente und dem Verbindungselement erläuterten Unterbrechungen versehen sein, um auch hier ein Zusammenfügen der beiden Elemente mit einem Einsetzen in einer Richtung senkrecht zu der Zahnlängsrichtung zu ermöglichen.

Ein erfindungsgemäßes Anbauteil oder ein mit der Längsverzahnung versehenes Strebenelement des Bausatzes kann dabei auch wie ein Schnellwechselelement wirken. Denn es ist möglich, die mit den Längsverzahnungen gebildete Verbindung durch einfaches Lösen der Klemmkraft und Herausziehen des Strebenelements oder des ersten Elements des Anbauteils aus dem jeweils anderen Element zu lösen, und dann ein anderes, anders gebildetes Element (ein anderes Strebenelement oder ein Strebenelement mit anderen weiteren Anbauten oder ein anderes erstes Element des Anbauteils) wieder mit dem jeweils anderen Element zu verbinden. Durch das Vorsehen zum Beispiel eines Anschlages kann gewährleistet werden, dass die Verbindung in exakt gleicher geometrischer Position erhalten wird, so dass die Auswechselteile in exakt gleicher Positionierung und reproduzierbar ein- und ausgewechselt werden können.

Bei dem erfindungsgemäßen Bausatz kann ebenso wie bei dem erfindungsgemäßen Anbauteil das wenigstens eine Befestigungsmittel ein Klemmmittel zum Aufbringen einer quer, insbesondere senkrecht, zu den Oberflächen, an denen die Längsverzahnungen ausgebildet sind, verlaufenden Klemmkraft umfassen. Dies kann zum Beispiel eine mit einem Gewindeabschnitt durch ein erstes der Elemente geführte, in eine Gewindebohrung des zweiten Elementes eingesetzte Klemmschraube sein.

Ebenso gut kann das wenigstens eine Befestigungsmittel bei dem erfindungsgemäßen Bausatz oder bei dem erfindungsgemäßen Anbauteil auch (dies auch zusätzlich zu einem wie vorstehend beschriebenen Klemmmittel) ein solches Klemmmittel umfassen, mit dem eine parallel zu den Oberflächen, an denen die Längsverzahnungen ausgebildet sind, verlaufende Klemmkraft aufgebracht werden kann. Dies kann zum Beispiel durch eine parallel zu den mit den Längsverzahnungen versehenen Flächen geführte Klemmschraube bewerkstelligt werden, die die beiden miteinander zu verbinden Elemente gegeneinander verspannt. Hierzu kann die Klemmschraube zum Beispiel mit einem Gewindeabschnitt durch eine Schraubenöffnung an einem ersten Element geführt, mit einem Schraubenkopf an dem ersten Element gehalten und in eine in dem zweiten Element, zum Beispiel in einem Grund, ausgebildete Gewindebohrung eingeschraubt werden. Es kann aber auch zum Beispiel einen Nutenstein oder dergleichen verwendet werden, um hier ein entsprechendes Gewinde bereitzustellen und die Klemmkraft mit einer solchen Schraube aufzubringen.

Die Längsverzahnungen in dem erfindungsgemäßen Bausatz und ebenso in dem erfindungsgemäßen Anbauteil können zum Beispiel eine im Querschnitt symmetrische Zahnform aufweisen. Sie können aber auch eine im Querschnitt asymmetrische Sägezahnform haben.

Die Längsverzahnungen in dem erfindungsgemäßen Bausatz und auch in dem erfindungsgemäßen Anbauteil können mit Vorteil eine Zahnbasis mit einer Breite von 3 bis 6 mm aufweisen. Sie können ferner eine Zahnhöhe von 1,5 bis 3 mm aufweisen.

In den Längsverzahnungen können in den Zahnreihen mit Vorteil 3 bis 10, insbesondere 4 bis 8 parallele Längszähne angeordnet sein. Es hat sich nämlich herausgestellt, dass mit einer solchen Anzahl von Längszähnen eine ausreichende Klemmkraft und damit ein ausreichender Halt der so geschaffenen Verbindung mit den Klemmmitteln erreicht werden kann, dass zugleich in den Strukturen auftretende Lasten gering gehalten werden können, sodass die so hergestellten Elemente auch bei Aufbringen der Klemmkräfte haltbar bleiben.

Mit der Erfindung wird schließlich auch eine Vorrichtung für die positionsfeste Aufnahme von Werkstücken bereitgestellt, die unter Verwendung eines wie vorstehend näher beschriebenen Bausatzes und/oder unter Verwendung eines wie vorstehend näher dargestellten Anbauteils gebildet ist.

Weitere Vorteile und Merkmale der Erfindung ergeben sich aus der nachfolgenden Beschreibung von Ausführungsbeispielen anhand der beigefügten Figuren. Dabei zeigen:
- Fig. 1: eine dreidimensionale Ansicht eines mit einem erfindungsgemäß gestalteten Bausatz aufgebauten Rahmens als ein einfaches Beispiel für eine dreidimensionale Struktur zum Festlegen von Werkstücken, bzw. ein Teil einer solchen Struktur;
- Fig. 2: teilweise in Explosionsdarstellung eine Detailansicht der Verbindung zwischen Strebenelementen und einem Verbindungselement in dem in Fig. 1 gezeigten Rahmen;
- Fig. 3: eine erste Gestaltungsvariante eines Strebenelements, das zu einem erfindungsgemäßen Bausatz gehörig ist;
- Fig. 4: eine zweite Gestaltungsvariante eines Strebenelements, das zu einem erfindungsgemäßen Bausatz gehörig ist;
- Fig. 5: eine dritte Gestaltungsvariante eines Strebenelements, das zu einem erfindungsgemäßen Bausatz gehörig ist;
- Fig. 6: in einer ersten Perspektive eine Explosionsdarstellung eines als Schnellwechselverbinder ausgebildeten erfindungsgemäß gestalteten Anbauteils;
- Fig. 7: das Anbauteil aus Figur 6 in Explosionsdarstellung in einer zweiten Perspektive;
- Fig. 8: in Explosionsdarstellung ein alternativ gestaltetes Anbauteil in Form eines Schnellwechselverbinders;
- Fig. 9: das Anbauteil aus Figur 8 in einer zusammengefügten Darstellung in perspektivischer Ansicht;
- Fig. 10: in perspektivischer Ansicht ein wie in den Figuren 8 und 9 dargestelltes Anbauteil mit einem alternativen Befestigungsmittel;
- Fig. 11: das Anbauteil nach Figur 10 in einer Ansicht von schräg unten;
- Fig. 12: ein weiteres Beispiel für ein erfindungsgemäßes Anbauteil, hier einen Justageschlitten, in einer ersten Relativposition;
- Fig. 13: das Anbauteil aus Figur 12 in einer zweiten Relativposition;
- Fig. 14: das Anbauteil aus Figuren 12 und 13 in einer Explosionsdarstellung;
- Fig. 15: in einer Explosionsdarstellung ein weiteres erfindungsgemäß gestaltetes Anbauteil in Form eines Spannelements; und
- Fig. 16: das in Figur 15 dargestellte Anbauteil in zusammengefügtem Zustand.

In den Figuren sind schematisch verschiedene Ausführungsgestalten und mögliche Ausführungsformen von Elementen eines erfindungsgemäßen modularen Bausatzes zum Aufbau von dreidimensionalen Strukturen für die positionsfeste Aufnahme von Werkstücken, von erfindungsgemäß gestalteten Anbauteilen sowie von einem einfachen Beispiel für eine mit einem erfindungsgemäßen Bausatz gebildete dreidimensionale Struktur dargestellt. Dabei sind die figürlichen Darstellungen als rein schematisch zu verstehen und keineswegs als vollständige Konsumtionszeichnungen. Sie sind auch nicht zwingend maßstabsgerecht. Vielmehr dienen diese Figuren lediglich der Veranschaulichung der erfindungswesentlichen Eigenschaften und Merkmale für die nachfolgende Beschreibung, in der auf diese Figuren verwiesen und Bezug genommen wird.

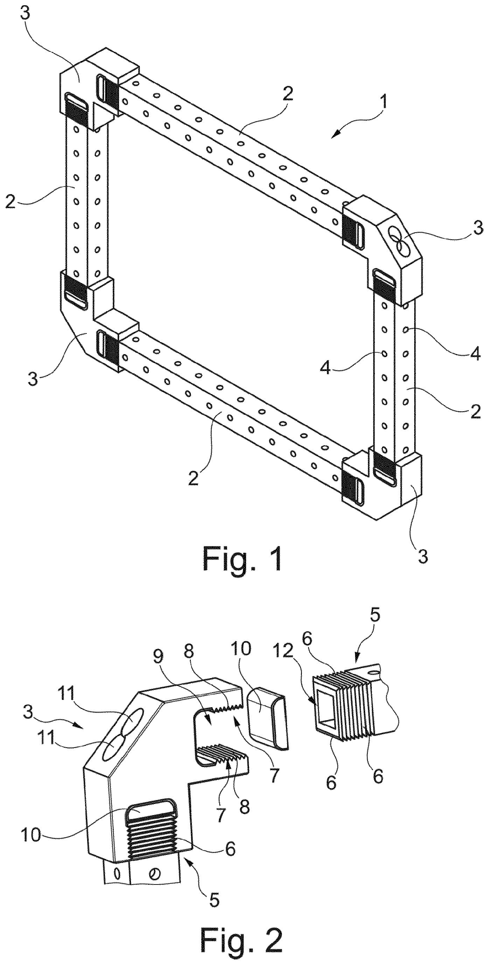

In Figur 1 ist zunächst eine mit Elementen eines erfindungsgemäßen modularen Bausatzes gebildete, einfache dreidimensionale Struktur in Form eines Rahmens 1 gezeigt. Dieser Rahmen 1 setzt sich zusammen aus quaderförmigen Strebenelementen 2 von unterschiedlicher Länge, die über Verbindungselemente 3 miteinander verbunden sind. Figur 2 zeigt in einer vergrößerten und teilweise explodierenden Darstellung die Details der Verbindung zwischen den Strebenelementen 2 und den Verbindungselementen 3. Wie schon in Figur 1, insbesondere aber auch in Figur 2 zu erkennen, weisen die Strebenelemente 2 im Bereich ihrer Längsenden 5 jedenfalls an zwei einander gegenüberliegenden Seitenflächen, im gezeigten Ausführungsbeispiel an allen vier Seitenflächen umlaufend, Längsverzahnungen 6 auf. Diese Längsverzahnungen 6 sind durch in Zahnreihen parallel zueinander angeordnete Längszähne gebildet, die mit ihrer Zahnlängsrichtung vorliegend senkrecht zu einer jeweiligen Längsachse der Strebenelemente 2 verlaufen.

An den Verbindungselementen 3 sind einander planparallel gegenüberliegende, aufeinander zu weisende Lagerflächen 7 vorgesehen, an denen ebenfalls Längsverzahnungen 8 gebildet sind. Diese Längsverzahnungen 8 sind korrespondierend zu den Längsverzahnungen 6 gebildet, sodass die Strebenelemente 2 zum Verbinden mit den Verbindungselemente 3 mit zwei einander gegenüberliegenden, mit Längsverzahnungen 6 versehenen Außenflächen in Kontakt mit den Lagerflächen 8 gebracht und die Längsverzahnungen 6 mit den Längsverzahnungen 8 kämmend ineinander geschoben werden können. Um die so bereits in Richtungen quer zu der Zahnlängsrichtung der jeweiligen Längsverzahnungen 6 und 8 gesicherte Verbindung auch in einer Richtung parallel zu den Zahnlängsrichtungen zu sichern, ist in dem Verbindungselemente 3 in einer Aufnahme 9 ein Druckstück 10 angeordnet. Durch eine in Richtung einer Endfläche der Aufnahme 9 geführte Gewindebohrung 11 ist eine (hier nicht gezeigte) Schraube geführt und in die Gewindebohrung 11 eingeschraubt. Diese Schraube durchragt die Endfläche der Aufnahme 9 und drückt, wenn sie weiter in Richtung der Endfläche und über diese hinaus eingeschraubt wird, gegen das Druckstück 10, welches sich in der Aufnahme 9 mit einem gewissen Spiel in der Zahnlängsrichtung der Längsverzahnungen 8 bewegen kann. Im zusammengefügten Zustand des Strebenelements 2 und des Verbindungselements 3, wenn also die Längsverzahnungen 6 mit den Längsverzahnungen 8 kämen, wird so das Druckstück 10 gegen eine Stirnfläche 12 des Strebenelements gedrückt und wird damit eine Klemmkraft in einer Richtung senkrecht zu den Zahnlängsrichtungen aufgebracht, die die Längsverzahnungen 6, 8 gegeneinander verklemmt und damit die Verbindung zwischen dem Strebenelement 2 und dem Verbindungselement 3 auch in einer Richtung parallel zu den Zahnlängsrichtungen fixiert.

Wie leicht zu erkennen ist, kann hier eine Positionierung des Strebenelement 2 relativ zu dem Verbindungselement 3 in Richtung der Zahnlängsrichtung stufenlos variiert werden, sodass hier Positionsanpassungen möglich sind, bevor mit dem Druckstück 10 durch Anziehen der in die Gewindebohrung 11 eingesetzten Schraube und Pressen der Schraube gegen das Druckstück 10 die Verklemmung und damit Fixierung der Verbindung erwirkt wird. Die hier beschriebene Verbindung ist einfach zu realisieren und kann schnell fixiert und, durch Lösen der in der Gewindebohrung 11 sitzenden Schraube, wieder gelöst werden.

Zu erkennen ist hier auch, dass die Strebenelemente 2 an ihren Außenflächen mit in einem vorgegebenen Rastermaß beanstandeten Rasterbohrungen 4 versehen sind. Diese dienen der Festlegung von zum Beispiel weiteren Strebenelementen für die Fortführung des Aufbaus einer komplexer gestalteten dreidimensionalen Struktur für die Aufnahme von in komplexen Formen gebildeten Werkstücken und deren sichere und positionsfeste Festlegung an der Struktur oder der Festlegung von Anbauteilen.

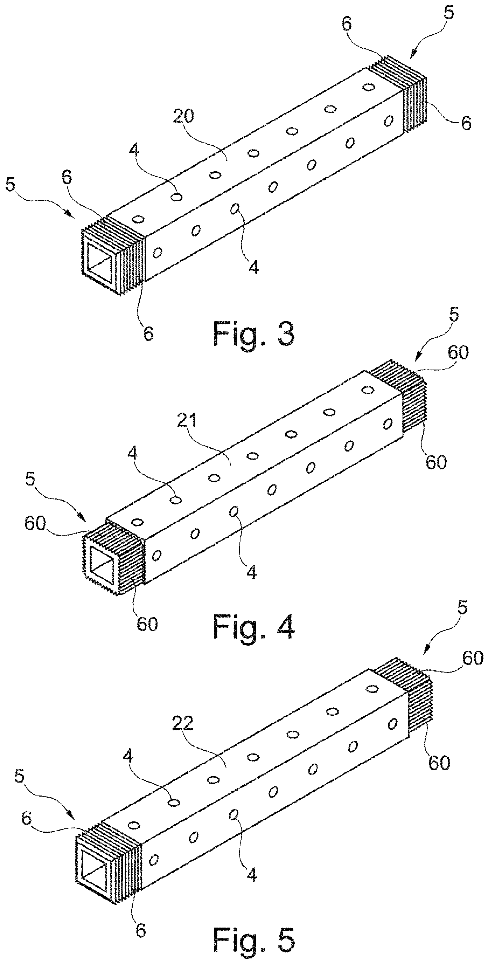

In den Figuren 3 bis 5 sind unterschiedliche Strebenelemente 20 (Figur 3), 21 (Figur 4) und 22 (Figur 5) dargestellt. Diese Strebenelemente können allesamt Bestandteil eines erfindungsgemäßen modularen Bausatzes sein. Alle Strebenelemente 20, 21, 22 sind wiederum mit in dem Rastermaß beanstandeten Rasterbohrungen 4 versehen. Sie weisen jeweils an beiden ihrer Längsenden 5 Längsverzahnungen, erneut an allen Seitenflächen, auf. Das in Figur 3 gezeigte Strebenelement 20 entspricht einem Strebenelement 2 aus dem in Figur 1 und 2 dargestellten Rahmen 1, indem es an den Längsenden 5 jeweils senkrecht zur Strebenlängsachse verlaufende Längsverzahnungen 6 aufweist. Das Strebenelement 21 hat im Bereich der Längsenden 5 Längsverzahnungen 60, in denen die Längszähne mit ihrer Zahnlängsrichtung parallel zur Längsachse des Strebenelements 21 orientiert sind. Die Längsverzahnungen 60 in einer solchen Orientierung kann ebenfalls mit Verbindungselemente gekoppelt werden, in denen an Lagerflächen entsprechend orientierte Längsverzahnungen angeordnet sind. Diese Orientierung der Längsverzahnungen erlaubt eine stufenlose Distanzverstellung in Längsrichtung des Strebenelements 21. Das Strebenelement 22 ist in einer Mischbauform gestaltet mit senkrecht zu der Strebenlängsachse orientierter Längsverzahnungen 6 im Bereich eines ersten Längsendes 5 und mit parallel zu der Strebenlängsachse orientierten Längsverzahnungen 60 im Bereich eines zweiten Längsendes 5 des Strebenelements 22.

In den gezeigten Ausführungsbeispielen sind jeweils an beiden Längsenden 5 der Strebenelemente 2 Längsverzahnungen 6 bzw. 60 vorgesehen. Dies ist für Strebenelemente in einem erfindungsgemäßen Bausatz nicht zwingend erforderlich. Ein Strebenelement, welches nur mit einem der Längsenden 5 mit einem Verbindungselement verbunden werden soll, kann zum Beispiel auch nur an einem der Längsenden 5 eine Längsverzahnung 6 oder 60 aufweisen. Weiterhin sind in den Figuren die Längsverzahnungen 6, 60 an den Längsenden 5 jeweils an allen vier Außenflächen eingebracht dargestellt. Es ist hier ebenso gut möglich, die Längsverzahnungen 6, 60 lediglich an zwei einander gegenüberliegenden Außenflächen anzubringen, das um 90° um die Strebenlängsachse versetzte Paar von Außenflächen ohne Längsverzahnungen 6 bzw. 60 zu gestalten. Weiterhin können auch Strebenelemente gebildet sein, in denen umlaufend an allen vier Außenflächen eines Längsendes 5 Längsverzahnungen angeordnet sind, dabei paarweise einander gegenüberliegend unterschiedlich orientierte Längsverzahnungen, also an einem ersten Paar einander gegenüberliegender Außenflächen Längsverzahnungen 6 mit senkrecht zu der Längsachse des Strebenelements orientierten Zahnlängsrichtungen, an einem zweiten Paar einander gegenüberliegender Außenflächen mit Längsverzahnungen 60, die parallel zur Strebenlängsachse verlaufende Zahnlängsrichtungen aufweisen. Sind dann wiederum an beiden Längsenden 5 Längsverzahnungen 6, 60 angebracht, so können auf zusammenhängenden Außenflächen an den beiden Längsenden 5 jeweils gleich orientierte Längsverzahnungen 6 oder 60 angeordnet sein, oder aber auch unterschiedlich orientierte Längsverzahnungen 6 und 60. Es ist weiterhin auch möglich, Längsverzahnungen an den Längsenden 5 der Strebenelemente vorzusehen, die eine andere Orientierung relativ zu der Strebenlängsachse aufweisen als parallel zu dieser oder senkrecht dazu, um zum Beispiel Verbindungen unter einem bestimmten Winkel realisieren zu können.

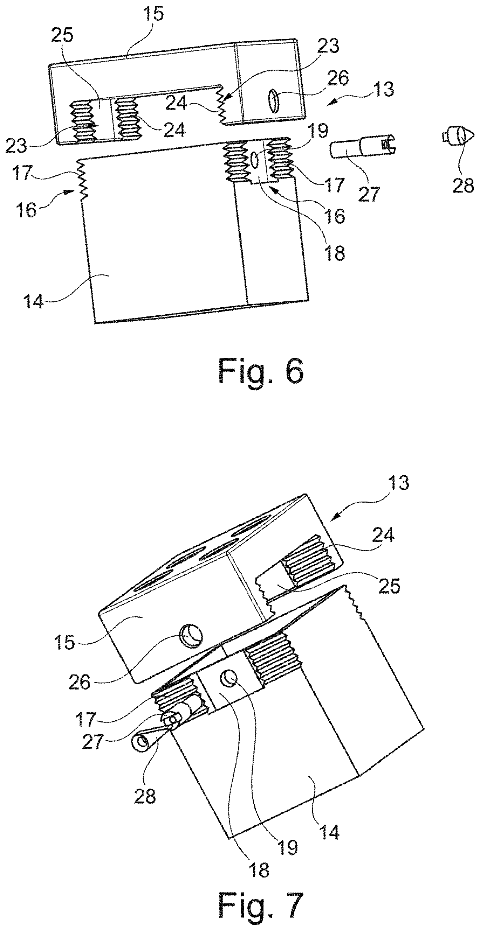

In den Figuren 6 und 7 ist als eine weitere Variante einer Umsetzung der Erfindung ein erfindungsgemäßes Anbauteil in Form eines Schnellwechselverbinders 13 gezeigt. Der Schnellwechselverbinder 13 hat eine Basis 14 und einen mit der Basis 14 lösbar verbindbaren Aufsatz 15. An der Basis 14 sind an zwei einander gegenüberliegenden, zueinander planparallelen Außenflächen 16 Längsverzahnungen 17 ausgebildet. Die Längsverzahnungen sind hier in ihrer Zahnlängsrichtung nicht durchgehend über die gesamte Fläche verlaufend, wie zum Beispiel in dem Fall des in Figur 3 gezeigten Strebenelements 20, sondern sind in einem mittleren Abschnitt der Fläche durch eine Unterbrechung 18 unterbrochen. In diesem Bereich ist die Oberfläche der Außenfläche 16 rückspringend. In etwa im Zentrum der Unterbrechung 18 ist eine Bohrung 19 eingebracht.

Der Aufsatz 15 hat zwei einander planparallel gegenüberliegende Lagerflächen 23, an denen zu den Längsverzahnungen 17 korrespondierende Längsverzahnungen 24 vorgesehen sind. Auf diese Längsverzahnungen sind in Zahnlängsrichtung nicht durchgehend, sondern mit einer Unterbrechung 25 ausgeführt, wobei auch hier im Bereich der Unterbrechung 25 die Oberfläche der Lagerfläche 23 zurückspringt. Der Aufsatz 15 kann nun in zwei verschiedenen Weisen mit der Basis 14 verbunden werden. Er kann vollständig seitlich und in Richtung der Zahnlängsrichtung der Längsverzahnungen 17 und 24 auf die Basis aufgeschoben werden, sodass die Längsverzahnungen 17 und 24 miteinander kämmen. Er kann aber auch zunächst von oben und quer, insbesondere senkrecht, zu den Zahnlängsrichtungen der Längsverzahnungen 17, 24 so aufgesetzt werden, dass ein mit den Längsverzahnungen 24 versehener Bereich der Lagerfläche 23, der in Zahnlängsrichtung gesehen eine Erstreckung aufweist, die der in gleicher Richtung gesehenen Erstreckung der Unterbrechung 19 entspricht, mit der Unterbrechung 19 in Flucht gebracht wird. Dabei wird dann zugleich auch ein mit der Längsverzahnung 17 versehener Bereich der Außenfläche 16, dessen Erstreckung in Richtung der Zahnlängsrichtung einer in gleicher Richtung gesehenen Erstreckung der Unterbrechung 25 entspricht, fluchtend mit der Unterbrechung 25 orientiert. Dies geschieht auf beiden einander gegenüberliegenden Seiten. Dadurch kann nun der Aufsatz 15 von oben auf die Basis 14 aufgesetzt werden. Anschließend können durch seitliches Verschieben entlang der Zahnlängsrichtungen die Längsverzahnungen 24 mit den Längsverzahnungen 17 in kämmenden Eingriff gebracht werden.

Ist ein Ansetzen des Aufsatzes 15 an die Basis 14 auf einer der beschriebenen Weisen erfolgt, so wird ein Exzenterstift 27 durch eine Bohrung 26 in dem Aufsatz 15, die in der Unterbrechung 25 der zugehörigen Lagerfläche 23 mündet und diese ebenfalls durchstößt bis in die Bohrung 19 geführt. Der Exzenterstift 27 hat einen im Durchmesser kleineren Abschnitt, der in die Bohrung 19 passt und einen im Durchmesser größeren Abschnitt, der in die Bohrung 26 passt. Diese beiden Abschnitte sind jeweils mit kreisförmigem Durchmesser, jedoch exzentrisch zueinander gebildet. An dem Exzenterstift 27 ist ein Drehgriff 28 festgelegt, mit dem der Exzenterstift 27 in den Bohrungen 19, 26 rotiert werden kann. Durch ein Verdrehen des Exzenterstifts 27 in den Bohrungen 19, 26 wird aufgrund der Exzentrizität der beiden Abschnitte des Exzenterstifts 27 eine quer zu den Längsachsen der Bohrungen 19, 26 wirkende und damit auch quer zu den Zahnlängsrichtungen der Längsverzahnungen 17, 24 und im Wesentlichen parallel zu den Außenflächen 16 und den Lagerflächen 23 wirkende Klemmkraft aufgebracht und damit die so geschaffene Verbindung fixiert und verriegelt. Gelöst werden kann diese Verbindung durch einfaches Zurückdrehen des Exzenterstifts 27. Somit kann hier eine schnelle und feste Verbindung geschaffen und wieder gelöst werden. Die exakte und positionsgetreue Ausrichtung des Aufsatzes 15 relativ zu der Basis 14 ist durch die Positionierung der beiden Bohrungen 19, 26 gesichert, die durch den Exzenterstift 27 noch einmal ausgerichtet wird. In einem Schnellwechselsystem 13 kann nun ein Aufsatz 15 schnell und einfach durch einen anderen ersetzt werden. Zum Beispiel können auf entsprechenden Aufsätzen 15 an den dort ausgebildeten Rasterbohrungen 4 (siehe Figur 7) festgelegte weitere Aufbauten von unterschiedlicher Geometrie vorhanden sein, um damit zum Beispiel einen Auflagepunkt für ein Werkstück im Raum unterschiedlich anordnen zu können. Die Rasterbohrungen 4 an dem Aufsatz 15 können insbesondere im Rastermaß den Rasterbohrungen 4 in den in Figuren 1 bis 5 gezeigten Strebenelementen entsprechen.

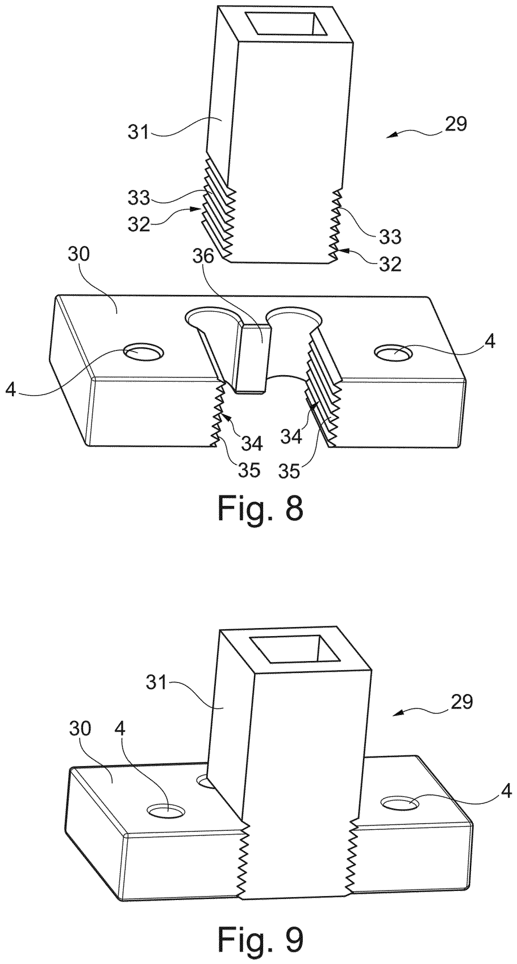

Ein weiteres Ausführungsbeispiel für ein erfindungsgemäßes Anbauteil ist in den Figuren 8 bis 11 gezeigt. Auch hier ist das Anbauteil ein Schnellwechselverbinder 29. Dieser enthält eine Basis 30 und einen Aufsatz 31. An der Basis sind auch hier Rasterbohrungen 4 vorgesehen, deren Anordnung und Abstand mit Vorteil wiederum einem generell für die verschiedenen Elemente eines Bausatzes vorgegebenen Rastermaß entsprechen können. Damit kann zum Beispiel eine solche Basis 30 an einem Strebenelement 2 festgelegt werden, wie es in einem Rahmen 1 gemäß Figur 1 verbaut ist, um damit die dreidimensionale Struktur für die positionsfeste Aufnahme von Werkstücken fortzubauen.

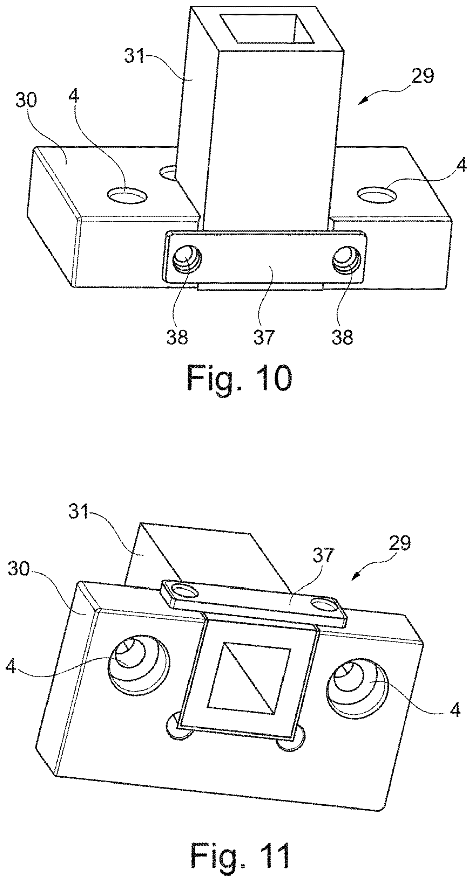

Im Falle des hier gezeigten Schnellwechselverbinders 29 sind einander planparallel gegenüberliegende Außenflächen 32 an dem Aufsatz 31 mit Längsverzahnungen 33 versehen, sind an der Basis 30 einander planparallel gegenüberliegende Lagerflächen 34 mit korrespondierende Längsverzahnungen 35 ausgebildet. Zum zusammenfügen des Aufsatzes 31 mit der Basis 30 werden also die Längsverzahnungen 33 kämmend in die Längsverzahnungen 35 eingeschoben. Eine Anschlagfläche 36 an der Basis 30 dient einer reproduzierbaren Positionierung des Aufsatzes 31 an der Basis 30. Der zusammengefügte Zustand des Schnellwechselverbinders 29 ist in Figur 9 gezeigt. Für eine Fixierung der Verbindung kann nun vorgesehen sein, dass der Bereich der Basis 29, in dem die Lagerflächen 34 mit den Längsverzahnungen 35 ausgebildet sind, mit einem gewissen Untermaß in Zahnlängsrichtung im Vergleich zu einer Erstreckung des quaderförmigen Aufsatzes 31 in dieser Richtung gebildet ist. Somit steht also in dem in Figur 9 gezeigten Zustand der Aufsatz 31 leicht über die in dieser Figur vorn gezeigte Längsfläche der Basis 30 über. Die Verbindung kann dann fixiert werden, indem ein in den Figuren 10 und 11 gezeigter Riegel 37 über diesen Bereich gelegt und mit durch Bohrungen 38 in dem Riegel 37 in in den Figuren nicht näher dargestellte Gewindebohrungen in der Basis 30 geführten Schrauben zum Aufbringen einer Andruckkraft gegen die Basis 30 und den Aufsatz 31 gedrückt wird, sodass der Aufsatz 31 mit einer dem Riegel 37 gegenüberliegenden Seitenfläche gegen die Anschlagfläche 36 gepresst und damit in einen Positionsesten und reproduzierbaren Sitz gebracht wird. Auch bei diesem Schnellwechselverbinder 29 kann der Aufsatz 31 schnell von der Basis 30 gelöst und entfernt werden, indem nämlich die Schrauben in den Bohrungen 38 gelöst und der Riegel 37 entfernt wird. Dann lässt sich der Aufsatz 31 entlang der Zahnlängsrichtungen aus der Basis 30 entnehmen und ein neuer Aufsatz 31 mit anderer Gestaltung und/oder anderen Anbauteilen lässt sich einsetzen und in gleicher Weise, wie vorstehend beschrieben, wieder verriegeln.

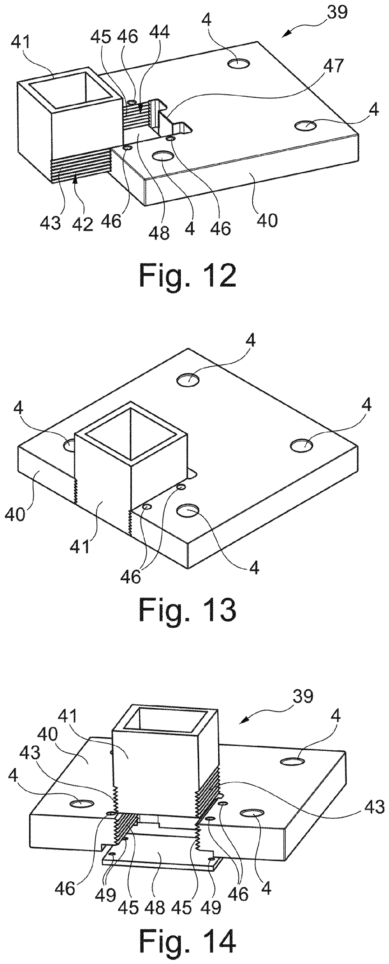

In den Figuren 12 bis 14 ist ein weiteres mögliches Anbauteil gezeigt, welches die efindungsgemäßen Merkmale der für eine Verbindung genutzten korrespondierenden Längsverzahnungen aufweist. Hier ist das Anbauteil als ein Justageschlitten 39 realisiert. Der Justageschlitten 39 hat eine Basis 40, in der wiederum Rasterbohrungen 4 vorgesehen sein können, insbesondere solche, die in dem Rastermaß des gesamten Bausatzes bzw. Baukastensystems zueinander angeordnet und voneinander beanstandet sind. Die Basis 40 lässt sich also wiederum an entsprechenden anderen Elementen des Bausatzes festlegen und zum Beispiel mittels durch die Rasterbohrungen 4 geführten und in Gegengewinde eingeschraubte Verbindungschrauben. Mit der Basis 40 zusammenwirkend und an dieser festlegbar ist ein Schieber 41. Der Schieber 41 weist wiederum Außenflächen 42 auf, die einander planparallel gegenüberliegen und mit Längsverzahnungen 43 versehen sind. Diese Längsverzahnungen sind korrespondierend zu an einander planparallel gegenüberliegenden Lagerflächen 44 der Basis 40 ausgebildeten Längsverzahnungen 45 gestaltet, sodass der Schieber 41 entlang der Zahnlängsrichtung der Längsverzahnungen 43 und 45 in die Basis eingeschoben werden kann. In der Basis sind im Bereich der Lagerflächen 44 parallel zu den Lagerflächen 44 und senkrecht zu der Zahnlängsrichtung der Längsverzahnungen 45 geführte Bohrungen 46 eingebracht. Eine quer, insbesondere senkrecht, zu den Lagerflächen 44 verlaufende Anschlagfläche 47 ist analog zu der Anschlagfläche 36 in dem zuvor beschriebenen Ausführungsbeispiel an der Basis 40 ausgebildet und dient als Endanschlag für den Schieber 41. Weiterhin ist eine Klemmplatte 48 vorgesehen, die Gewindebohrungen 49 aufweist. Diese Gewindebohrungen 49 fluchten mit den Bohrungen 46 in der Basis 40, sodass durch die Bohrungen 46 geführte Schrauben in die Gewindebohrungen 49 in der Klemmplatte 48 eingeschraubt werden können. Der Schieber 41 kann nun in seiner Position relativ zu der Basis 40 in Richtung der Zahnlängsrichtungen kontinuierlich über einen Einstellungsbereich variabel eingestellt werden. Anschließend, wenn eine gewünschte Position erreicht ist, wird durch Anziehen der Schrauben, die durch die Bohrungen 46 in die Gewindebohrungen 49 geführt sind, die Klemmplatte 48 in Richtung des Bereichs mit den Längsverzahnungen 47 gezogen bzw. angehoben und drückt dabei auf eine an der Klemmplatte 48 anliegende Stirnfläche des Schieber 41 und bringt damit eine parallel zu den Lagerflächen 44 und den Außenflächen 42 gerichtete, quer, insbesondere senkrecht, zu den Zahnlängsrichtungen verlaufende Klemmkraft auf die Längsverzahnungen 43 und 45 auf und verkeilt diese so und fixiert diese Verbindung.

Es ist ersichtlich, dass mit einem solchen Element eine Positionseinstellung auch jenseits eines zum Beispiel durch die Rasterbohrungen 4 vorgegebenen Rastermaßes möglich ist, um damit zum Beispiel die genaue Lage eines mit einem Haltemittel abzubildenden Auflagepunkts für ein Werkstück im Raum feinjustieren zu können. Das in den Figuren 12 bis 14 gezeigte Anbauteil kann aber auch als Schnellwechselverbinder genutzt werden, insbesondere da durch die Anschlagfläche 47 eine definierte und reproduzierbare Endposition des Schieber 41 relativ zu der Basis 40 bestimmt ist, sodass durch Austausch eines Schiebers 41 gegen einen anderen Schieber, der eine andere Form aufweist und/oder eine andere bauliche Fortführung der Struktur hat, ein schneller Umbau und ein Schnellwechsel der Struktur zum Aufnehmen von Werkstücken erhalten werden kann.

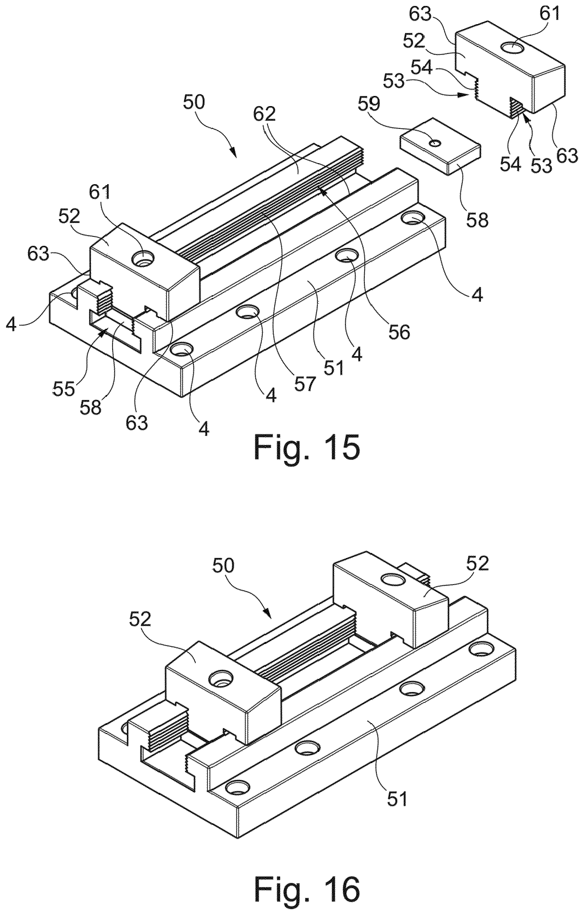

Ein weiteres mögliches Anbauteil in einer erfindungsgemäßen Gestaltung ist in den Figuren 15 und 16 dargestellt. Dort ist ein Spannelement 50 gezeigt, dass eine Klemmbackenführung 51 und zwei Klemmbacken 52 aufweist. An den Klemmbacken 52 sind an einander planparallel gegenüberliegenden Außenflächen 53 Längsverzahnungen 54 gebildet. Die Klemmbackenführung 51 weist eine T-Nut 55 auf, die seitlich einen schmaleren Nutenbereich begrenzende, einander planparallel gegenüberliegende Lagerflächen 56 mit Längsverzahnungen 57 umfasst, die parallel zu einer Längsrichtung der T-Nut 55 verlaufen. Diese Längsverzahnungen 57 sind wiederum korrespondierend zu den Längsverzahnungen 54 an den Klemmbacken 52 gebildet, sodass die Klemmbacken 52 mit ihren Längsverzahnungen 54 in die Längsverzahnungen 57 der T Nuten 55 kämmend eingeschoben werden können. Im Grund der T-Nut 55 sind Nutensteine 58 angeordnet, die Gewindebohrungen 59 aufweisen. In diese Gewindebohrungen 59 werden durch Bohrungen 61 in den Klemmbacken 52 geführte Schrauben eingeschraubt. Die Klemmbacken 52 können, bei noch nicht fest angezogen Schrauben zusammen mit den Nutensteinen 58 parallel zu der Zahnlängsrichtung der Längsverzahnungen 57 und 54 in der T-Nut 55 und durch die kämmenden Längsverzahnungen 54, 57 geführt verschoben werden, um zum Beispiel an einem zu fixierenden Werkstück anzugreifen. Durch Festziehen der durch die Bohrungen 61 geführten und in die Gewindebohrungen 59 geschraubten Schrauben wird dann eine zum Nutengrund der T-Nut 55 gerichtete Zugkraft auf die Klemmbacken 52 aufgebracht, die parallel zu den Erstreckungen der Außenflächen 53 und der Lagerflächen 56 und senkrecht zu den Zahnlängsrichtungen verläuft und damit ein Verklemmen und Verkeilen der ineinandergreifenden und kämmenden Längsverzahnungen und so eine Fixierung der Klemmbacken 52 in der eingestellten Position bewirkt. Hierbei stützen sich in dem gezeigten Ausführungsbeispiel die Klemmbacken 52 noch mit einer Unterseite von seitlich vorstehenden Überständen 63 auf Planflächen 62 am Rand der Öffnung der T-Nut 55 ab und werden so weiter abgestützt, erreichen noch einen weiteren Klemmeffekt.

Auch das Spannelement 50 weist in seiner Klemmbackenführung 51 Rasterbohrungen 4 auf, die wiederum insbesondere entsprechend dem Rastermaß des modularen Bausatzes bzw. Baukastensystems insgesamt angeordnet können, sodass eine Klemmbackenführung 51 zum Beispiel an Strebenelementen 2 festgelegt werden kann, wie sie im Rahmen 1 gemäß Figur 1 gezeigt sind, indem die Rasterbohrungen 4 von Klemmbackenführung 51 und Strebenelement 2 fluchtend übereinander gebracht und dann Verbindungselemente durch die Rasterbohrungen 4 geführt und befestigt werden.

Es ist an dieser Stelle noch zu erwähnen, dass mit den erfindungsgemäß gebildeten Längsverzahnungen nicht nur eine Verstellmöglichkeit der so verbundenen Elemente entlang der Zahnlängsrichtung besteht. Es kann auch eine Verstellmöglichkeit quer, nämlich senkrecht zu der Zahnlängsrichtung ergeben, in dem die Längsverzahnungen in unterschiedlichen Zahnzuordnungen miteinander in Eingriff gebracht werden. Hier ergibt sich zwar keine kontinuierliche Verstellmöglichkeit, sondern eine um den Zahnabstand benachbarter Längszähne gerasterte. Gleichwohl ist diese Verstellmöglichkeit aber feiner in der Einstellbarkeit als zum Beispiel durch ein Rastermaß vorgegeben, in dem die Rasterbohrungen 4 angeordnet sind.

Die einzelnen Bestandteile und Elemente eines erfindungsgemäßen modularen Bausatzes und/oder eines erfindungsgemäßen Anbauelements können - dies nicht nur im Rahmen der gezeigten Ausführungsbeispiel - insbesondere aus einem metallischen Werkstoff, mit Vorteil aus Aluminium oder einer Aluminiumlegierung, gebildet sein.

Die Längsverzahnungen können insbesondere mit 3 bis 10 in Zahnreihen parallel zueinander angeordneten Längszähnen gebildet sein, vorzugsweise mit 4 bis 6 solcher Längszähne. Die Längszähne können insbesondere als asymmetrisch gebildete Sägezähne geformt sein. Sie können aber auch mit symmetrischem Querschnitt gebildet sein.

### Bezugszeichenliste

- 1: Rahmen
- 2: Strebenelement
- 3: Verbindungselement
- 4: Rasterbohrung
- 5: Längsende
- 6: Längsverzahnung
- 7: Lagerfläche
- 8: Längsverzahnung
- 9: Aufnahme
- 10: Druckstück
- 11: Gewindebohrung
- 12: Stirnfläche
- 13: Schnellwechselverbinder
- 14: Basis
- 15: Aufsatz
- 16: Außenfläche
- 17: Längsverzahnung
- 18: Unterbrechung
- 19: Bohrung
- 20: Strebenelement
- 21: Strebenelement
- 22: Strebenelement
- 23: Lagerfläche
- 24: Längsverzahnung
- 25: Unterbrechung
- 26: Bohrung
- 27: Exzenterstift
- 28: Drehgriff
- 29: Schnellwechselverbinder
- 30: Basis
- 31: Aufsatz
- 32: Außenfläche
- 33: Längsverzahnung
- 34: Lagerfläche
- 35: Längsverzahnung
- 36: Anschlagfläche
- 37: Riegel
- 38: Bohrung
- 39: Justageschlitten
- 40: Basis
- 41: Schieber
- 42: Außenfläche
- 43: Längsverzahnung
- 44: Lagerfläche
- 45: Längsverzahnung
- 46: Bohrung
- 47: Anschlagfläche
- 48: Klemmplatte
- 49: Gewindebohrung
- 50: Spannelement
- 51: Klemmbackenführung
- 52: Klemmbacke
- 53: Außenfläche
- 54: Längsverzahnung
- 55: T-Nut
- 56: Lagerfläche
- 57: Längsverzahnung
- 58: Nutenstein
- 59: Gewindebohrung
- 60: Längsverzahnung
- 61: Bohrung
- 62: Planfläche
- 63: Überstand

## Patentansprüche

1. Modularer Bausatz zum Aufbau von dreidimensionalen Strukturen (1) für die positionsfeste Aufnahme von Werkstücken mit quaderförmigen Strebenelementen (2, 20, 21, 22) und mit Verbindungselementen (3) zum Verbinden der quaderförmigen Strebenelemente (2, 20, 21, 22), **dadurch gekennzeichnet, dass** wenigstens eines der quaderförmigen Strebenelemente (2, 20, 21, 22) an einem Längsende (5) an wenigstens zwei einander gegenüberliegenden Seitenflächen jeweils einen Bereich aufweist, in dem jeweils eine aus parallel und entlang einer Zahnlängsrichtung verlaufenden, insbesondere 3 bis 10, vorzugsweise 4 bis 8 parallele Längszähne aufweisenden, Zahnreihen gebildete Längsverzahnung (6, 60) eingebracht ist, und dass die Zahnreihen der beiden Längsverzahnungen (6, 60) ebenfalls parallel zueinander verlaufen und dass wenigstens eines der Verbindungselemente (3) an wenigstens zwei einander in einem dem Abstand der beiden die Längsverzahnungen (6, 60) aufweisenden, einander gegenüberliegenden Seitenflächen entsprechenden Abstand vorgesehenen, planparallel gegenüberliegenden Lagerflächen (7) zu den Längsverzahnungen (6, 60) an dem Längsende (5) des Strebenelements (2, 20, 21, 22) korrespondierende Längsverzahnungen(8), insbesondere mit 3 bis 10, vorzugsweise 4 bis 8 parallel verlaufenden Längszähnen, aufweist, wobei die Längsverzahnungen (6, 60) an dem Längsende (5) des Strebenelements (2, 20, 21, 22) in die Längsverzahnungen (8) an den Lagerflächen (7) des Verbindungselements (3) kämmend und in einer Richtung quer zu der Längsrichtung der Längsverzahnungen (6, 60, 8) eine formschlüssige Verbindung bildend einführbar sind, und dass weiterhin wenigstens ein, insbesondere als Klemmmittel (10) ausgebildetes, Befestigungsmittel vorgesehen ist zum Fixieren der mit ihren Längsverzahnungen (6, 60, 8) ineinander geführten Elemente Strebenelement (2, 20, 21, 22) und Verbindungselement (3) in einer eingestellten Relativposition zueinander, insbesondere durch Aufbringen einer Klemmkraft auf die durch Einführen der an dem Längsende (5) des Strebenelements (2, 20, 21, 22) ausgebildeten Längsverzahnungen (6, 60) in die an den Lagerflächen (7) des Verbindungselements (3) ausgebildeten Längsverzahnungen (8) miteinander kämmenden Längsverzahnungen (6, 60, 8) in einer quer zu der Zahnlängsrichtung der Längsverzahnungen (6, 60, 8) liegenden Klemmrichtung.

2. Bausatz nach Anspruch 1, **dadurch gekennzeichnet, dass** die an dem Längsende (5) des Strebenelements (2, 20, 21, 22) ausgebildeten Längsverzahnungen (60) mit ihrer Zahnlängsrichtung parallel zu einer entlang einer längsten Erstreckung des Strebenelements (2, 20, 21, 22) verlaufenden Längsrichtung orientiert verlaufen.

3. Bausatz nach einem der vorhergehenden Ansprüche, **dadurch gekennzeichnet, dass** die an dem Längsende (5) des Strebenelements (2, 20, 21, 22) ausgebildeten Längsverzahnungen (6) mit ihrer Zahnlängsrichtung quer, insbesondere senkrecht, zu der entlang einer längsten Erstreckung des Strebenelements (2, 20, 21, 22) verlaufenden Längsrichtung orientiert verlaufen.

4. Bausatz nach einem der vorhergehenden Ansprüche, **dadurch gekennzeichnet, dass** die Strebenelemente (2, 20, 21, 22) und/oder die Verbindungselemente (3) mit in vorgegebenen Rasterabständen angeordneten Einrichtungen (4) zum Festlegen von weiteren Strebenelementen (2, 20, 21, 22), Verbindungselementen und/oder Anbauteilen, wie Halteelementen, Anlagestücken, Distanzstücken, Justierstücken oder dergleichen, versehen sind, insbesondere mit in den Rasterabständen angeordneten Bohrungen.

5. Bausatz nach einem der vorhergehenden Ansprüche, **dadurch gekennzeichnet, dass** die Längsverzahnungen (6, 60, 8) an dem Längsende (5) des Strebenelements (2, 20, 21, 22) und an den Lagerflächen (7) des Verbindungselements (7) in der Zahnlängsrichtung gesehen jeweils wenigstens eine Unterbrechung aufweisen, wobei die Unterbrechungen jeweils eine zu einer in der Zahnlängsrichtung gesehenen Länge eines mit der Längsverzahnung (6, 60, 8) versehenen Bereichs korrespondierende, in Zahnlängsrichtung gesehene Länge aufweisen, wobei die Oberflächen in dem Bereich der Unterbrechungen rückspringend ausgebildet sind, so dass durch Einführen eines mit der Längsverzahnung (6, 60, 8) versehenen Bereichs jeweils des Strebenelements (2, 20, 21, 22) bzw. des Verbindungselements (3) quer zu der Zahnlängsrichtung, insbesondere senkrecht dazu, in die jeweils an dem Verbindungselement (3) bzw. dem Strebenelement (2, 20, 21, 22) ausgebildete Unterbrechung und anschließendes relatives Verschieben von Strebenelement (2, 20, 21, 22) und Verbindungselement (3) in der Zahnlängsrichtung ein Eingriff der Längsverzahnungen (6, 60, 8) erreicht werden kann.

6. Anbauteil (13, 29, 39, 50) für den Aufbau einer dreidimensionalen Struktur (1) für die positionsfeste Aufnahme von Werkstücken, insbesondere als Bestandteil eines Bausatzes nach einem der vorhergehenden Ansprüche, **dadurch gekennzeichnet, dass** es wenigstens ein erstes Element (14, 31, 41, 52) mit zwei an einander planparallel gegenüberliegenden Außenflächen (16, 32, 42, 53) gebildeten, jeweils aus parallel und entlang einer Zahnlängsrichtung verlaufenden, insbesondere 3 bis 10, vorzugsweise 4 bis 8 parallele Längszähne aufweisenden, Zahnreihen gebildete Längsverzahnungen (17, 33, 43, 53) aufweist, wobei die Zahnreihen der beiden Längsverzahnungen (17, 33, 43, 53) parallel zueinander verlaufen, und dass es wenigstens ein zweites Element (15, 30, 40, 51) mit zwei einander in einem dem Abstand der beiden die Längsverzahnungen (17, 33, 43, 53) aufweisenden gegenüberliegenden Außenflächen (16, 32, 42, 53) entsprechenden Abstand angeordneten, planparallel gegenüberliegenden Lagerflächen (23, 34, 44, 56) mit zu den Längsverzahnungen (17, 33, 43, 53) der Außenflächen (16, 32, 42, 53) korrespondierende Längsverzahnungen(8), insbesondere mit 3 bis 10, vorzugsweise 4 bis 8 parallel verlaufenden Längszähnen, aufweist, wobei die Längsverzahnungen (17, 33, 43, 53) der Außenflächen (16, 32, 42, 53) in die Längsverzahnungen (24, 35, 45, 57) der Lagerflächen (23, 34, 44, 56) kämmend und in einer Richtung quer zu der Längsrichtung der Längsverzahnungen (17, 24, 33, 35, 43, 45, 53, 57) eine formschlüssige Verbindung bildend einführbar sind, und dass weiterhin wenigstens ein, insbesondere als Klemmmittel (17, 45, 59) ausgebildetes, Befestigungsmittel vorgesehen ist zum Fixieren der mit ihren Längsverzahnungen (17, 24, 33, 35, 43, 45, 53, 57) ineinander geführten Elemente erstes Element (14, 31, 41, 52) und zweites Element (15, 30, 40, 51) in einer eingestellten Relativposition zueinander, insbesondere durch Aufbringen einer Klemmkraft auf die durch Einführen der Längsverzahnungen (17, 33, 43, 53) der Außenflächen (16, 32, 42, 53) in die Längsverzahnungen (24, 35, 45, 57) der Lagerflächen (23, 34, 44, 56) miteinander kämmenden Längsverzahnungen (17, 24, 33, 35, 43, 45, 53, 57) in einer quer zu der Zahnlängsrichtung der Längsverzahnungen (17, 24, 33, 35, 43, 45, 53, 57) liegenden Klemmrichtung.

7. Anbauteil (50) nach Anspruch 6, **dadurch gekennzeichnet, dass** es zwei erste Elemente in Form von Klemmbacken (52) und ein zweites Element in Form einer Klemmbackenführung (51) aufweist und als Klemm- bzw. Spannelement gebildet ist.

8. Anbauteil (39) nach Anspruch 6, **dadurch gekennzeichnet, dass** es als Justageschlitten ausgebildet ist.

9. Anbauteil nach Anspruch 8, **dadurch gekennzeichnet, dass** es zwei erste und ein zweites Element oder zwei zweite und ein erstes Element aufweist, wobei das nur einmal vorhandene Element an zwei zueinander beabstandeten Abschnitten jeweils mit parallel zueinander verlaufenden Längsverzahnungen versehene, zueinander planparallel angeordnete Flächen aufweist, wobei die mit den Längsverzahnungen versehenen Flächen in einem ersten der beiden Abschnitte senkrecht zu den mit den Längsverzahnungen versehenen Flächen in dem zweiten der beiden Abschnitte orientiert sind und wobei die Längsverzahnungen der Flächen in dem ersten Abschnitt zu den Längsverzahnungen der Flächen in dem zweiten Abschnitt parallel zu einer zu den Flächen beider Abschnitte senkrechten Ebene und senkrecht zueinander verlaufen.

10. Anbauteil (13) nach einem der Ansprüche 6 bis 9, **dadurch gekennzeichnet, dass** die Längsverzahnungen (17, 24) der Außenflächen (16) und der Lagerflächen (23) in der Zahnlängsrichtung gesehen jeweils wenigstens eine Unterbrechung (18, 25) aufweisen, wobei die Unterbrechungen (18, 25) jeweils eine zu einer in der Zahnlängsrichtung gesehenen Länge eines mit der Längsverzahnung (17, 24) versehenen Bereichs korrespondierende, in Zahnlängsrichtung gesehene Länge aufweisen, wobei die Oberflächen der Außenfläche (16) und der Lagerfläche (23) in dem Bereich der Unterbrechungen (18, 25) jeweils rückspringend ausgebildet sind, so dass durch Einführen eines mit der Längsverzahnung (17, 24) versehenen Bereichs jeweils der Außenfläche (16) bzw. der Lagerfläche (23) quer zu der Zahnlängsrichtung, insbesondere senkrecht dazu, in die jeweils an der Lagerfläche (23) bzw. der Außenfläche (16) ausgebildete Unterbrechung (25, 18) und anschließendes relatives Verschieben von erstem Element (14) und zweitem Element (15) in der Zahnlängsrichtung ein Eingriff der Längsverzahnungen (17, 24) erreicht werden kann.

11. Bausatz nach einem der Ansprüche 1 bis 5 oder Anbauteil nach einem der Ansprüche 6 bis 10, **dadurch gekennzeichnet, dass** das wenigstens eine Befestigungsmittel ein Klemmmittel (10, 27, 48, 59) zum Aufbringen einer quer, insbesondere senkrecht zu den Oberflächen, an denen die Längsverzahnungen ausgebildet sind, verlaufenden Klemmkraft umfasst.

12. Bausatz nach einem der Ansprüche 1 bis 5 oder 11 oder Anbauteil (13, 29, 39, 50) nach einem der Ansprüche 6 bis 11, **dadurch gekennzeichnet, dass** das wenigstens eine Befestigungsmittel ein Klemmmittel (35) zum Aufbringen einer parallel zu den Oberflächen, an denen die Längsverzahnungen ausgebildet sind, verlaufenden Klemmkraft umfasst.

13. Bausatz nach einem der Ansprüche 1 bis 5 oder 11 bis 12 oder Anbauteil (13, 29, 39, 50) nach einem der Ansprüche 6 bis 12, **dadurch gekennzeichnet, dass** die Längsverzahnungen (6, 8, 17, 24, 33, 35, 43, 45, 53, 57, 60) eine im Querschnitt symmetrische Zahnform oder eine im Querschnitt asymmetrische Sägezahnform aufweisen.

14. Bausatz nach einem der der Ansprüche 1 bis 5 oder 11 bis 13 oder Anbauteil (13, 29, 39, 50) nach einem der Ansprüche 6 bis 13, **dadurch gekennzeichnet, dass** die Längsverzahnungen (6, 8, 17, 24, 33, 35, 43, 45, 53, 57, 60) eine Zahnhöhe von 1,5 bis 3 mm und/oder eine Zahnbasis mit einer Breite von 3 bis 6 mm aufweisen.

15. Vorrichtung für die positionsfeste Aufnahme von Werkstücken, **dadurch gekennzeichnet, dass** sie unter Verwendung eines Bausatzes nach einem der Ansprüche 1 bis 5 oder 11 bis 14 und/oder unter Verwendung eines Anbauteils nach einem der Ansprüche 6 bis 14 in Form einer dreidimensionalen Struktur gebildet ist.
